# FASCICULE DE BREVET EUROPEEN

(11) **EP 4 291 862 B1**
(45) Date de publication et mention de la délivrance du brevet: **30.10.2024**
(21) Numéro de dépôt: 22702745.5
(22) Date de dépôt: 10.02.2022
(51) Int. Cl.: G01J 5/06, G01J 5/061

(54) **SYSTÈME DE DÉTECTION DE RAYONNEMENT ÉLECTROMAGNÉTIQUE ET PROCÉDÉ DE REFROIDISSEMENT**
SYSTEM ZUR DETEKTION ELEKTROMAGNETISCHER STRAHLUNG UND KÜHLVERFAHREN
SYSTEM FOR DETECTING ELECTROMAGNETIC RADIATION AND COOLING METHOD

(30) Priorité: 10.02.2021 FR 2101286
(43) Date de publication de la demande: 20.12.2023
(73) Titulaire: LYNRED, 91120 Palaiseau (FR)
(72) Inventeur: CASSAIGNE, Pierre, 38100 GRENOBLE (FR); FRENE, Eric, 38360 NOYAREY (FR)
(74) Mandataire: Talbot, Alexandre
(86) Numéro de dépôt international: PCT/EP2022/053300
(87) Numéro de publication internationale: WO 2022/171765

(56) Documents cités:
- FR-A1- 3 040 777
- US-A1- 2011 005 238

## Description

### Domaine technique

L'invention est relative à un système de détection d'un rayonnement électromagnétique et à un procédé de refroidissement d'un système de détection d'un rayonnement électromagnétique.

### Technique antérieure

Dans de nombreux domaines techniques, il est classique d'observer une scène au moyen d'un système de détection d'un rayonnement électromagnétique et préférentiellement d'un système de détection d'un rayonnement infrarouge.

Le système de détection est un système de détection refroidi, c'est-à-dire un système de détection qui est muni d'un refroidisseur. Le refroidisseur est configuré pour refroidir le dispositif électronique qui capte le rayonnement électromagnétique pour améliorer ses performances électro-optiques.

De manière conventionnelle, le circuit de détection forme un réseau plan focal qui est associé à un écran froid afin de canaliser le rayonnement électromagnétique à recevoir. L'écran froid est un élément creux de forme tubulaire ou sensiblement tubulaire et est surmonté par une fonction optique. Le circuit de détection et l'écran froid sont montés sur une table froide et tous ces éléments sont mécaniquement et thermiquement liés de sorte qu'ils doivent être refroidis par un refroidisseur.

Le circuit de détection, l'écran froid et la table froide sont disposés à l'intérieur d'un cryostat. Le refroidisseur est connecté physiquement au fond du cryostat et plus précisément au doigt froid qui supporte la table froide. Le refroidisseur est connecté thermiquement à la table froide pour réaliser son refroidissement. Le circuit de détection est refroidi au moyen du refroidisseur à travers la table froide.

La puissance frigorifique est appliquée à l'intérieur du volume délimité par le doigt froid et la table froide. Dans certaines configurations, le doigt froid est un tube ouvert à ses deux extrémités et la table froide est fixée de manière à assurer l'étanchéité de la connexion. La gaz cryogénique appliqué ne doit pas s'échapper dans le cryostat à basse pression. Dans d'autres configurations, le doigt froid est refermé à son extrémité supérieure ce qui améliore l'étanchéité mais introduit une résistance thermique supplémentaire entre la puissance frigorifique fournie par le refroidisseur et le circuit de détection à refroidir posé sur la table froide.

Dans les configurations de l'art antérieur, le refroidisseur, la table froide, le circuit de détection et la fonction optique sont alignés selon un axe qui correspond ou correspond sensiblement à l'axe optique du système optique. Le doigt froid supporte la table froide ce qui impose une raideur importante pour éviter que le circuit de détection se déplace à l'intérieur du cryostat lors des mouvements brusques imposés au système de détection. Il est également important que le doigt froid soit très isolant thermiquement sur sa paroi latérale pour éviter les pertes thermiques vers le cryostat qui est à une plus haute température. Le sommet du doigt froid est connecté thermiquement au refroidisseur et à la table froide et il se trouve à basse température. Au contraire, le pied du doigt froid est connecté au cryostat et se trouve à haute température.

Cette solution technique présente un certain nombre d'inconvénients et notamment elle impose des contraintes importantes au doigt froid dans les choix des matériaux utilisables ainsi que dans ses dimensions et sa réalisation.

Le document US2011/0005238 présente une configuration sensiblement similaire à la précédente avec une table froide qui supporte un circuit de détection à refroidir ainsi qu'un écran froid. Cet ensemble est installé à l'intérieur d'une enceinte qui est à basse pression. Un cryostat de forme tubulaire est utilisé avec un gaz cryogénique. Le cryostat forme un doigt froid qui fixe la table froide par rapport à l'enceinte. Le doigt froid est soumis aux mêmes contraintes que l'art antérieur. Le doigt froid est rendu étanche par un pont froid qui relie mécaniquement et thermiquement l'extrémité du doigt froid et la table froide. Le pont froid forme un anneau périphérique à la surface de la table froide et il assure la fixation de l'écran froid.

A la différence de la configuration précédente, le doigt froid ne se connecte pas sur la face inférieure de la table froide mais sur la face qui supporte le circuit de détection. Le doigt froid est alors très décalé par rapport à l'axe optique ce qui introduit un montage avec un porte-à-faux important préjudiciable à une bonne tenue mécanique et à une bonne maîtrise de la position de l'axe optique lorsque le système de détection se déplace. Afin de résoudre cet inconvénient, un deuxième doigt froid pour fixer au pont froid pour refroidir la table froide et l'écran froid. Cette solution technique ne résout pas les problèmes techniques visés plus haut car il est toujours nécessaire d'avoir un doigt froid qui est thermiquement isolant et mécaniquement très rigide. Cette configuration est plus difficile à réaliser car cela implique d'avoir des doigts froids ayant des dimensions quasi identiques, qui se déforment de manière semblable avec la température et qui travaillent à la même température pour éviter les phénomènes de dilatation différentielle et donc de décalage de l'axe optique en fonction de la température.

### Objet de l'invention

Un objet de l'invention consiste à prévoir un système de détection de rayonnement électromagnétique qui est plus performant que les configurations de l'art antérieur et notamment en relâchant des contraintes imposées aux performances mécano-thermiques du support thermiquement isolant. On tend à atteindre ce résultat au moyen d'un système de détection de rayonnement électromagnétique tel que défini dans la revendication 1.

Le système de détection de rayonnement électromagnétique est remarquable en ce que le refroidisseur est fixé mécaniquement sur la au moins une paroi latérale du cryostat et connecté thermiquement au circuit de détection au moyen d'un connecteur thermique reliant le refroidisseur et au moins l'un de la table froide et de l'écran froid.

Le connecteur thermique déformable comporte une première extrémité fixée au refroidisseur et une deuxième extrémité fixée à la table froide ou à l'écran froid.

Préférentiellement, la deuxième extrémité est fixée à une partie centrale de l'écran froid, la partie centrale s'étendant depuis le tiers inférieur jusqu'au tiers supérieur de l'écran froid selon un axe optique d'un ensemble de détection de rayonnement électromagnétique formé par le circuit de détection et l'écran froid. Dans un mode de réalisation particulier, le refroidisseur possède une première extrémité surmontée par un plot en saillie, le connecteur thermique étant fixé sur le plot en saillie. Le plot en saillie du refroidisseur est monté saillant de la face interne de la paroi latérale du cryostat.

Dans un mode de réalisation préférentiel, le connecteur thermique est un connecteur thermique déformable.

De manière avantageuse, le connecteur thermique déformable est choisi parmi, un ressort, une tresse, un tricot, un tissu, un soufflet, un piston ou au moins un fil en métal.

Dans un mode de réalisation particulier, un refroidisseur additionnel est fixé à la au moins une paroi latérale du cryostat et un connecteur thermique additionnel relie thermiquement une extrémité du refroidisseur additionnel et le sommet de l'écran froid, le connecteur thermique étant fixé à la table froide ou dans la moitié inférieure de l'écran froid s'étendant depuis la table froide.

Il est avantageux de prévoir que le refroidisseur soit un refroidisseur Stirling.

Préférentiellement, la conductivité thermique du support thermiquement isolant est inférieure à la conductivité thermique du connecteur thermique.

Dans un mode de réalisation avantageux, le support thermiquement isolant est ajouré et/ou la connexion entre le support thermiquement isolant et la table froide n'est pas étanche.

L'invention a également pour objet un procédé de refroidissement d'un système de détection de rayonnement électromagnétique comportant les étapes suivantes :
- fournir un système de détection de rayonnement électromagnétique selon l'une des configurations précédentes,
- activer le refroidisseur pour refroidir le circuit de détection.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1 représente de manière schématique, un premier mode de réalisation d'un système de détection de rayonnement électromagnétique ;
- la figure 2 représente de manière schématique, un second mode de réalisation d'un système de détection de rayonnement électromagnétique.

### Description des modes de réalisation

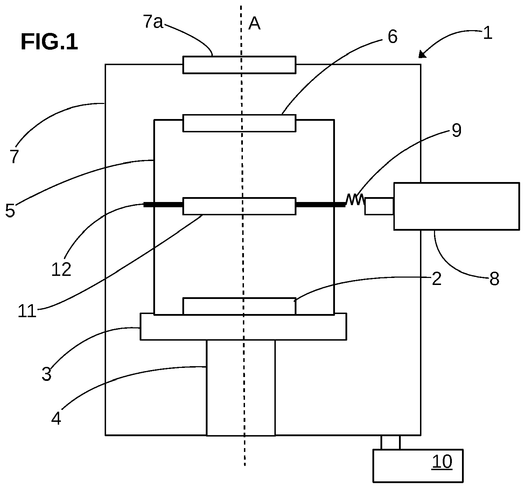

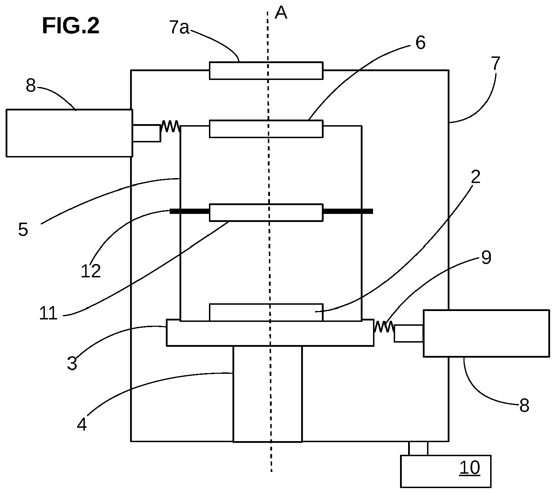

Les figures 1 et 2 illustrent des modes de réalisation différents d'un système de détection d'un rayonnement électromagnétique 1 qui comporte un circuit de détection 2 configuré pour détecter un rayonnement électromagnétique et fournir un signal électrique représentatif du rayonnement reçu. Le circuit de détection 2 capte un signal électromagnétique dans une gamme de longueur d'onde d'intérêt et il transforme ce signal électromagnétique en un signal électrique. Dans un mode de réalisation particulier, le rayonnement électromagnétique capté est un rayonnement infrarouge. Le signal électrique fourni est un signal en tension ou un signal en courant.

Dans un mode de réalisation particulier, le circuit de détection 2 est formé par deux substrats différents hybridés l'un sur l'autre. Le premier substrat possède un ou plusieurs photodétecteurs qui captent le signal électromagnétique pour le transformer en un signal électrique. Le deuxième substrat comporte un ou plusieurs circuits de lecture qui réalisent le stockage et/ou un premier traitement du signal électrique. Le signal électrique est ensuite transmis à un circuit de traitement qui va traiter le signal électrique.

Le système de détection de rayonnement électromagnétique 1 comporte une table froide 3 qui supporte le circuit de détection 2 et un support thermiquement isolant 4 qui supporte la table froide 3.

Le système de détection de rayonnement électromagnétique 1 comporte un écran froid 5 dont une première extrémité, dite extrémité inférieure, est fixée à la table froide 3. La connexion entre l'écran froid 5 et la table froide 3 entoure la portion du circuit de détection qui capte le rayonnement électromagnétique. L'écran froid 5 possède un pied qui est fixé à la table froide 3 ou au circuit de détection et un sommet qui possède une première fonction optique 6. L'écran froid 5 possède au moins une paroi latérale reliant le pied et le sommet. La au moins une paroi latérale bloque le rayonnement électromagnétique dans la gamme de longueur d'onde captée par le circuit de détection 2. Le rayonnement électromagnétique capté par le circuit de détection traverse la première fonction optique 6. La table froide 3 et l'écran froid 5 forment une enceinte opaque pour que le rayonnement destiné à atteindre le circuit de détection soit exclusivement le rayonnement qui a traversé la première fonction optique 6.

La première fonction optique 6 laisse passer au moins une partie du rayonnement électromagnétique reçu. La première fonction optique est préférentiellement choisie parmi, une lentille et un filtre optique. La lentille laisse passer au moins 90% du rayonnement électromagnétique et focalise le rayonnement électromagnétique. Le filtre optique est configuré pour bloquer une partie du signal reçu, par exemple pour bloquer une bande spectrale supérieure ou inférieure à une longueur d'onde de coupure.

Le système de détection du rayonnement électromagnétique 1 comporte un cryostat 7. Le cryostat 7 comporte un fond, un sommet et au moins une paroi latérale qui relie le fond et le sommet. Le cryostat 7 forme une enceinte fermée et étanche. La table froide 3, le circuit de détection 2 et l'écran froid 5 sont disposés à l'intérieur du cryostat 7. Le sommet du cryostat 7 possède une deuxième fonction optique 7a. La deuxième fonction optique 7a permet l'entrée du rayonnement électromagnétique dans le cryostat 7. De manière préférentielle, le cryostat 7 forme une enceinte opaque au rayonnement électromagnétique destiné à être capté par le circuit de détection 2 de sorte que le rayonnement électromagnétique capté est passé à travers la deuxième fonction optique 7a. Le support thermiquement isolant 4 supporte la table froide 3 et il possède une première extrémité fixée au cryostat 7 et une deuxième extrémité fixée à la table de froide 3. La table froide 3 est supportée mécaniquement par le cryostat 7 au moyen du support thermiquement isolant 4. La table froide 3 est montée immobile par rapport au cryostat 7. Le support thermiquement isolant 4 isole thermiquement la table froide 3 et le cryostat 7. Le support thermiquement isolant forme une première liaison mécanique entre la paroi du cryostat 7 et la table froide 3. La première liaison mécanique est une liaison mécanique rigide pour figer la position de la table froide 3 à l'intérieur du cryostat 7.

Un refroidisseur 8 est monté sur la au moins une paroi latérale du cryostat 7. Le refroidisseur 8 est connecté thermiquement au circuit de détection 2 de manière à refroidir le circuit de détection 2. Préférentiellement, le refroidisseur 8 est configuré pour que le circuit de détection 2 fonctionne à une température inférieure à 200K et préférentiellement à une température inférieure à 150K. Le refroidisseur 8 est fixé directement sur la paroi latérale du cryostat 7. La zone froide du refroidisseur 8 n'est pas en contact thermique avec le cryostat 7 pour éviter une déperdition de puissance frigorifique vers la paroi latérale du cryostat 7.

Le refroidisseur 8 est relié thermiquement à l'écran froid 5 et/ou à la table froide 3 par un connecteur thermique 9. Le connecteur thermique 9 permet d'apporter de l'énergie frigorifique du circuit de détection 2 pour abaisser sa température et améliorer ses performances électro-optiques. Le connecteur thermique 9 est distinct du support thermiquement isolant 4. Le connecteur thermique 9 définit une seconde liaison mécanique entre le refroidisseur 8 et l'ensemble formé par la table froide 3 et l'écran froid 5. La deuxième liaison mécanique est moins rigide que la première liaison mécanique ce qui permet de dissocier mécaniquement le refroidisseur 8 et l'ensemble formé par la table froide 3 et l'écran froid 5. Il est préférable de former une liaison souple, par exemple au moyen d'un élément flexible.

Le connecteur thermique 9 n'est pas associé thermiquement et mécaniquement au support thermiquement isolant 4 comme cela est le cas dans les configurations de l'art antérieur. Le connecteur thermique 9 est distinct du support thermiquement isolant 4 pour permettre de refroidir le circuit de détection 2 sans faire transiter les calories par le support thermiquement isolant 4 comme dans l'art antérieur. Le connecteur thermique 9 est fixé sur l'écran froid 5 ou sur la table froide 3. Le connecteur thermique 9 peut être connecté sur la face avant de la table froide recevant le circuit de détection, sur la face latérale de la table froide 3 ou éventuellement sur la face arrière. Il est avantageux de fixer le connecteur thermique sur la face avant ou sur la face latérale.

Alors que dans les configurations de l'art antérieur, le support thermiquement isolant 4 assure simultanément la fonction de support mécanique de la table froide 1, d'isolant thermique entre la table froide 3 et le pied du support thermiquement isolant 4, et la création de la source de refroidissement, la configuration selon l'invention dissocie ces fonctions en modifiant la disposition du refroidisseur 8 par rapport au cryostat 7 et au support thermiquement isolant 4.

Le support mécanique de la table froide 3 est dissocié du refroidissement de la table froide 3 ce qui permet de relâcher les contraintes de réalisation sur le support thermiquement isolant 4. Il est, par exemple, possible d'utiliser des matériaux qui sont mécaniquement plus rigides et/ou des architectures qui augmentent la rigidité du support thermiquement isolant 4 pour réduire les mouvements de la table froide 3 par rapport au cryostat 7. Il existe une plus grande liberté dans les matériaux utilisables et dans les architectures disponibles pour former un support thermiquement isolant 4 et rigide.

L'intérieur du cryostat 7 est soumis à une basse pression au moyen d'une pompe 10. La pompe 10 peut être connectée au cryostat 7 au moyen d'un tuyau qui débouche par exemple dans le fond ou sur la au moins une paroi latérale. Le connecteur thermique 9 permet d'évacuer de la chaleur ou d'apporter du froid au circuit de détection par conduction à l'intérieur du cryostat sous vide. Par exemple, la pression à l'intérieur du cryostat est inférieure à 30mbar, préférentiellement inférieure à 5.10⁻³mbar.

Le refroidisseur 8 n'apporte pas le froid par la partie interne du support thermiquement isolant 4 ce qui relâche les contraintes sur le maintien de la différence de pression entre l'intérieur du support thermiquement isolant 4 qui était soumis à une pression de plusieurs bars et l'extérieur du support thermiquement isolant qui était soumis à une pression de quelques mbars. De manière préférentielle, la pression est identique entre l'intérieur du support thermiquement isolant et l'extérieur du support thermiquement isolant ce qui permet de moins solliciter mécaniquement le support thermiquement isolant 4. De nouveaux matériaux et/ou de nouvelles formes de supports thermiquement isolants 4 sont ainsi possibles. Les performances mécaniques relatives à la rigidité du support thermiquement isolant ainsi que sa résistivité thermique peuvent être améliorées.

Comme illustré, le support thermiquement isolant 4 ne fait pas partie du refroidisseur ou d'un quelconque refroidisseur.

Dans un mode de réalisation particulier, le support thermiquement isolant 4 est ajouré ce qui permet de réduire la conductivité thermique entre le pied et le sommet du support thermiquement isolant 4, ainsi que la masse mécanique et la masse thermique. Une telle configuration est incompatible avec les systèmes de détection de l'art antérieur qui apportent le froid par l'intérieur du support thermiquement isolant 4.

Comme il n'est plus nécessaire d'avoir une zone de connexion entre la table froide 3 et le support thermiquement isolant 4 qui est étanche, en alternative ou en combinaison avec le mode de réalisation précédent, la face inférieure de la table froide 5 peut être texturés ou la face supérieure du support thermiquement isolant peut être texturée pour définir des trous traversants entre la table froide et le support thermiquement isolant 4. La texturation de la face inférieure de la table froide 5 permet, par exemple, d'améliorer le compromis entre rigidité mécanique et masse thermique.

Il est également possible de prévoir que la connexion mécanique entre la table froide 3 et le support thermiquement isolant 4 ne soit pas étanche. Cela permet de réduire les points de contact entre le support thermiquement isolant 4 et la table froide 3 ce qui permet de réduire la déperdition d'énergie frigorifique à travers le support thermiquement isolant 4.

L'installation du refroidisseur 8 sur la au moins une paroi latérale du cryostat 7 permet de réduire l'encombrement du système de détection 1 selon l'axe optique A représenté sur les figures 1 et 2. En déportant le refroidisseur 8 sur la paroi latérale du cryostat, on réduit les contraintes mécaniques imposées sur le cryostat 7 et notamment sur sa rigidité. Il est alors possible de réaliser un cryostat plus performant thermiquement ce qui permet de réduire son encombrement et donc l'encombrement général du système de détection 1.

Le connecteur thermique 9 est réalisé dans un matériau bon conducteur thermique, par exemple un métal et plus préférentiellement un métal choisi parmi l'or, l'argent et le cuivre. Le métal peut également être tout métal pur ou tout alliage qui possède une conductivité thermique supérieure à la conductivité du cuivre en dessous de 200K.

De manière préférentielle, la conductivité thermique du conducteur thermique 9 est supérieure à la conductivité thermique du support thermiquement isolant 4. refroidisseur 8 est connecté thermiquement au circuit de détection 2 au moyen d'un connecteur thermique déformable 9, par exemple un connecteur thermique flexible.

Le connecteur thermique déformable 9 ne forme pas une connexion mécanique rigide entre le circuit de détection 2 et le refroidisseur 8. Le connecteur thermique déformable 9 forme une connexion mécanique flexible et indirecte entre le refroidisseur 8 et le circuit de détection 2. Le connecteur thermique flexible forme une connexion mécanique déformable entre le refroidisseur 8 et l'ensemble formé par la table froide 3, le circuit de détection 2 et l'écran froid 5. Bien que la table froide 3 soit montée immobile dans le cryostat 7, l'utilisation d'un connecteur thermique déformable permet de réduire la sollicitation mécanique qui peut exister entre le refroidisseur 8 et l'ensemble formé par la table froide 3, le circuit de détection 2 et l'écran froid 5 quand une connexion mécanique rigide est formée. L'utilisation d'un connecteur thermique déformable permet par exemple d'éviter l'application d'un effort qui engendre un décalage de la première fonction optique et/ou de la deuxième fonction optique par rapport à l'axe optique.

La longueur effective du connecteur thermique déformable s'adapte entre l'extrémité du connecteur thermique 9 fixée au refroidisseur 8 et l'extrémité opposée fixée à la table froide 3 ou à l'écran froid 5. Cette adaptation de la longueur effective permet de compenser une évolution de la distance entre la paroi du cryostat 7 et la table 3 ou l'écran froid 5 lors d'une évolution de la température, par exemple pour tenir compte d'une différence de coefficient d'expansion thermique. Un tel phénomène peut arriver lors d'une mise en froid. L'adaptation de la longueur effective permet de compenser une évolution de la distance entre le cryostat et la table 3 ou l'écran froid 5, par exemple lors d'un mouvement brusque. Cela évite que la déformation de la paroi latérale du cryostat applique une contrainte importante sur la table froide 3 et/ou sur l'écran froid 5. L'utilisation d'un connecteur thermique 9 déformable est particulièrement avantageuse lorsque le refroidisseur est un refroidisseur Stirling qui est connu en soi et qui utilise des étapes de détente et de compression d'un gaz pour refroidir le circuit de détection 2. L'utilisation d'un connecteur thermique déformable 9 permet d'absorber au moins partie les vibrations et/ou de l'onde de choc causées par le refroidisseur Stirling. Le refroidisseur Stirling possède un piston qui se déplace pour comprimer ou détendre un gaz et ainsi obtenir une production de froid dans un fonctionnement particulier. Les déplacements en va-et-vient du piston génèrent des vibrations qui causent un déplacement entre le circuit de détection et au moins l'une de la première fonction optique 6 et de la deuxième fonction optique 7a. Cette vibration ou onde de choc se traduit par une dégradation de la qualité de l'image fournie par le système de détection. En utilisant, le connecteur thermique déformable 9, la qualité d'image peut être accrue tout en utilisant un refroidisseur Stirling. Dans une alternative de réalisation, le refroidisseur 8 est un refroidisseur Joule Thomson. La pression dans le refroidisseur Joule-Thomson est préférentiellement comprise entre 0,5 et 2 bars. Le gaz utilisé est préférentiellement choisi parmi l'hélium et l'argon.

L'utilisation d'un connecteur thermique 9 qui définit une seconde liaison mécanique qui est moins rigide que la première liaison mécanique permet de supprimer totalement ou en partie les efforts introduits par le refroidisseur 8. Lorsque le refroidisseur 8 vibre à cause de son fonctionnement, les vibrations sont moins transmises ou ne sont pas transmises à l'ensemble formé par la table froide 3 et l'écran froid 5. Le circuit de détection peut délivrer une image de meilleure qualité. Cela permet également de diminuer l'influence de l'expansion thermique ou de l'expansion thermique différentielle lorsque le système de détection passe d'une température de stockage à haute température, par exemple la température ambiante, à une température de fonctionnement qui est à plus basse température, par exemple une température cryogénique. Cela permet encore de réduire les efforts introduits par le refroidisseur lorsque le système de détection est soumis à des déplacements rapides dans de multiples directions.

Dans un mode de réalisation particulier, le connecteur thermique 9 déformable est choisi parmi un ou plusieurs fils thermiquement dissociés, un tissu, un tricot ; une tresse en matériau métallique, un ressort en matériau métallique et un piston en matériau métallique.

Dans un mode de réalisation particulier, le refroidisseur 8 peut être associé à plusieurs connecteurs thermiques 9 déformables qui ont tous une première extrémité connectée au refroidisseur 8 et dont les secondes extrémités opposées sont fixées à des endroits distincts de l'ensemble formé par l'écran froid 5 et la table froide 3.

La connexion thermique entre le refroidisseur 8 et la table froide 3 et/ou l'écran froid 5 permet d'éviter de faire transiter l'énergie frigorifique le long de toute la hauteur de l'écran froid 5, mais par exemple sur une fraction de la hauteur de l'écran froid 5, par exemple la moitié de la hauteur, En régime transitoire, la constante thermique d'une pièce de hauteur H étant généralement proportionnelle au carré de cette hauteur (H²), dans le cas du refroidissement par une extrémité. Le fait de refroidir par une zone proche du centre (H/2 par exemple) permet de diminuer la constante thermique de la pièce, et donc son temps de mise en froid. Dans le cas d'un refroidissement à la position H/2, la constante thermique sera divisée par un facteur proche de 4 soit (1/2)².

Cela permet de réduire le temps de mise en froid, c'est-à-dire la durée que met l'ensemble formé par la table froide 3, le circuit de détection 2 et l'écran froid 5 pour atteindre une température prédéfinie, préférentiellement la température de travail. La température de travail est la température à partir de laquelle un circuit de commande autorise l'acquisition d'un signal électromagnétique et sa transformation en un signal électrique exploitable.

Pour réduire la durée de mise en froid, il est préférable que la puissance frigorifique circule facilement entre le refroidisseur 8 et l'ensemble à refroidir. La configuration est moins avantageuse que celle de l'art antérieur car la surface d'échange est réduite à la surface du connecteur thermique 9. Il est donc préférable de réduire la distance qui sépare l'ensemble à refroidir et le refroidisseur.

Pour réduire la durée de mise en froid (avec une puissance de refroidissement prédéfinie), il est préférable d'avoir un connecteur thermique 9 qui possède une résistance thermique faible. Il est également avantageux de réduire autant que possible la longueur du connecteur thermique 9. A résistance thermique constante, plus la longueur du connecteur thermique est importante et plus la durée de mise en froid augmente. Il est donc avantageux de réduire la distance de séparation entre l'extrémité du refroidisseur 8 fournissant le froid et la table froide 3 et l'écran froid 5 pour faciliter le transport du froid.

Dans un mode de réalisation particulier, le refroidisseur 8 possède une partie saillante qui est montée en saillie de la face interne de la au moins une paroi latérale. La partie saillante permet de réduire la distance qui sépare le refroidisseur 8 et l'ensemble à refroidir en comparaison d'une configuration où le refroidisseur 8 est dans le prolongement de la au moins une paroi latérale.

Il est particulièrement avantageux que la partie saillante soit formée par un plot en saillie. Le plot en saillie est réalisé dans un bon conducteur thermique, par exemple en matériau métallique, de préférence en cuivre, en or ou en argent. Le connecteur thermique 9, de préférence le connecteur thermique 9 déformable, possède une extrémité fixée au plot en saillie pour faciliter le transport du froid. Le plot en saillie est un bon conducteur thermique pour rapport la source froide et l'ensemble à refroidir ce qui permet de réduire la longueur du connecteur thermique 9.

Afin de faciliter le transport du froid depuis le refroidisseur 8 et à travers un connecteur thermique 9 déformable, il existe des compromis à trouver entre la résistance thermique du connecteur thermique déformable 9 et la rigidité du connecteur thermique 9 déformable. Selon la configuration du système de détection de rayonnement électromagnétique, il peut être avantageux de choisir un ressort, une tresse, un tricot, un tissu, un soufflet, un piston ou au moins un fil conducteur. Il peut être avantageux de combiner ces configurations pour faciliter le transport du froid.

En effet, un fil métallique qui présente une section trop faible sera un mauvais conducteur thermique alors qu'un fil métallique ayant une section trop importante peut devenir trop rigide et casser. Une tresse, un tricot ou un tissu est formé par plusieurs fils qui sont liés entre eux. Les fils sont mobiles les uns par rapport aux autres pour fournir de la souplesse, mais ils sont en contact pour ne pas pénaliser la conduction thermique. La tresse, le tricot ou le tissu peut représenter un bon compromis entre la conductivité thermique et la rigidité.

L'utilisation d'un ressort est également envisageable. Sa configuration est adaptée afin de fournir le meilleur compromis entre la conductivité thermique et la raideur dans la gamme de température de fonctionnement. Le ressort peut être un ressort conique, un ressort-diaphragme, un ressort annulaire, un ressort hélicoïdal, un ressort à lame, un ressort spiral ou tout autre configuration de ressort.

Il est particulièrement avantageux de réaliser l'acquisition du rayonnement électromagnétique lorsque l'ensemble formé par la table froide 3, le circuit de détection 2 et l'écran froid 5 a atteint la température de travail. Il est alors intéressant de placer judicieusement l'extrémité du connecteur thermique 9 destinée à être fixée à l'ensemble formé par la table froide 3, l'écran froid 5 et le circuit de détection 2 pour que le froid parcourt la distance la plus faible possible pour atteindre la partie la plus éloignée de l'ensemble.

Dans un mode de réalisation préférentiel, la deuxième extrémité est fixée à une partie centrale de l'écran froid 5. La partie centrale s'étend depuis le tiers inférieur jusqu'au tiers supérieur de l'écran froid 5 selon l'axe optique A de l'ensemble de détection de rayonnement électromagnétique formé par le circuit de détection 2 et l'écran froid 5. En effet, la configuration utilisée dans l'art antérieur est particulièrement désavantageuse car le froid apporté par le sommet du support thermiquement isolant doit traverser une partie de la table froide puis remonter sur toute la hauteur de la paroi latérale de l'écran froid 5 pour refroidir le sommet de l'écran et la première fonction optique 6. La configuration de l'art antérieur présente une durée de mise en froid plus importante que celles des configurations décrites plus haut avec une connexion sur l'écran froid.

Dans un mode de réalisation particulier, la deuxième extrémité est fixée au barycentre thermique de l'ensemble à refroidir formé par exemple par l'écran froid 5, la table froide 3 ou de l'ensemble thermique formé par l'écran froid 5, la table froide 3 et le circuit de détection 2.

Le barycentre thermique peut se définir de la manière suivante. Le barycentre thermique correspond à un point de l'ensemble à refroidir qui représente la minimisation de la somme des constantes thermiques τₜₕ. La constante thermique τₜₕ est définie de la manière suivante τₜₕ = Rₜₕ × Cₜₕ avec
Rₜₕ : résistance thermique équivalente en mode transitoire de l'ensemble à refroidir. La résistance thermique s'exprime en K/W.
Cₜₕ : capacité thermique équivalente de la pièce à refroidir. La capacité thermique s'exprime en J/K.

Dans un mode de réalisation particulier, l'élément à refroidir est l'écran froid 5 et l'écran froid 5 possède une optique traversée par le signal électromagnétique à capter. La deuxième extrémité est fixée au barycentre de l'écran froid 5 de sorte que l'énergie frigorifique arrive en même temps à l'optique et la table froide 4. La durée de refroidissement jusqu'à la température de travail est optimisée.

Dans un mode de réalisation particulier illustré à la figure 2, le système de détection de rayonnement électromagnétique 1 est muni d'un refroidisseur additionnel 8 connecté à l'ensemble formé par l'écran froid 5, le circuit de détection 2 et la table froide 3 par un connecteur thermique additionnel 9.

Le connecteur thermique additionnel 9 est un connecteur thermique déformable selon l'une des configurations décrites précédemment. Le refroidisseur additionnel 8 peut être un refroidisseur Stirling ou un refroidisseur Joule-Thomson.

Dans le mode de réalisation illustré, le refroidisseur 8 est connecté à la partie inférieure de l'écran froid 5 ou à la table froide 3 et le refroidisseur additionnel 8 est connecté à la partie supérieure de l'écran froid 5. L'ensemble formé par la table froide 3, le circuit de détection 2 et l'écran froid 5 est refroidi par deux refroidisseurs qui sont connectés à deux endroits différents.

Dans le mode de réalisation illustré à la figure 2, les deux refroidisseurs sont connectés respectivement au sommet de l'écran froid 5 et à la table froide 3 pour refroidir l'écran par ces deux extrémités opposées. Une configuration alternative avec le refroidisseur additionnel 8 connecté à distance du sommet de l'écran froid 5 et le refroidisseur 8 connecté dans la partie inférieure de l'écran froid est également possible.

Dans un mode de fonctionnement particulier, le refroidisseur 8 et le refroidisseur additionnel 8 fonctionnent et s'arrêtent simultanément. Dans un autre mode de réalisation, le refroidisseur 8 et le refroidisseur additionnel 8 s'activent simultanément pour réaliser la mise en froid du système de détection 1. Une fois la mise en froid atteinte, c'est-à-dire la température de travail atteinte, le refroidisseur additionnel s'arrête. Le refroidisseur 8 peut fournir seul la puissance frigorifique nécessaire au maintien du système de détection à la température de travail durant son fonctionnement. Dans une telle configuration, il est avantageux d'utiliser un refroidisseur additionnel 8 de type Joule-Thomson.

Le refroidisseur 8 peut être un refroidisseur Stirling ou un refroidisseur Joule-Thomson qui possède une puissance frigorifique supérieure à la puissance frigorifique du refroidisseur additionnel.

Les contraintes mécaniques sur le support thermiquement isolant 4 ayant été amoindries, il est possible de former un support thermiquement isolant plus thermiquement isolant ce qui permet de réduire la puissance du refroidisseur 8 pour un résultat identique ce qui permet de réduire son encombrement. Il est également possible de réduire la hauteur du support thermiquement isolant 4.

Le système de détection 1 est muni d'une ligne connectée d'une part au circuit de détection 2 et d'autre part à un circuit de traitement (non illustré) disposé hors du cryostat 7. La ligne assure la transmission du signal électrique hors du cryostat 7. Le connecteur thermique 9 ne participe pas à la transmission d'un signal électrique. Le connecteur thermique 9 peut éventuellement être relié à la masse.

Comme le refroidisseur 8 n'est plus connecté directement au support thermiquement isolant 4, le fond du cryostat 7 peut être formé par une seule pièce ce qui améliore l'étanchéité.

Le cryostat 7 se trouve à haute température et il est uniquement connecté à la table froide 3 par l'intermédiaire du support thermiquement isolant 4 qui forme une résistance thermique afin de limiter la perte frigorifique par cette voie. Il existe une plus grande liberté dans le choix du matériau formant le cryostat et notamment la paroi latérale afin de supporter le poids du refroidisseur 8 et éventuellement du refroidisseur additionnel. Le refroidisseur 8 se trouve majoritairement à l'extérieur du cryostat 7. La paroi latérale du cryostat 7 possède un trou permettant à la zone froide du refroidisseur 8 de s'introduire dans le volume du cryostat 7.

La figure 1 illustre un système de détection de rayonnement électromagnétique muni d'un seul refroidisseur et la figures 2 illustre un système de détection de rayonnement électromagnétique avec deux refroidisseurs. Il est possible d'augmenter le nombre de refroidisseurs pour augmenter le nombre de points d'introduction d'énergie frigorifique sur l'ensemble formé par la table froide 3, le circuit de détection 2 et l'écran froid 5. Cependant, l'augmentation du nombre de refroidisseurs augmente l'encombrement du système de détection.

Dans les modes de réalisation particuliers illustrés, l'écran froid 5 possède une fonction optique additionnelle 11 disposée entre la première fonction optique 6 et le circuit de détection 2. Il est avantageux de connecter le connecteur thermique 9 à proximité de la fonction optique additionnelle 11 ou dans le plan perpendiculaire à l'axe optique 1 qui contient la fonction optique additionnelle 11. La fonction optique additionnelle 11 est montée sur un support 12.

Dans un mode de réalisation particulier, le système de détection est un système de détection embarqué par exemple un système de détection destiné à être monté sur un véhicule ce qui suppose des contraintes techniques accrues sur l'alignement des différentes fonctions optiques et du circuit de détection 2 par rapport à l'axe optique. Le système de détection peut être installé sur un avion, un hélicoptère, une voiture ou tout autre véhicule soumis à des mouvements brusques. Il est également possible que le système de détection soit porté par une personne ce qui augmente les contraintes d'encombrement et de gestion du poids.

Les figures 1 et 2 illustrent un mode de réalisation particulier où le refroidisseur est fixé sur la paroi latérale du cryostat 7. Cette configuration permet de réduire l'encombrement en hauteur, c'est-à-dire selon la direction de l'axe optique A. ce qui peut faciliter l'intégration du système de détection dans des appareils où l'encombrement selon cette dimension est limité.

Dans un mode de réalisation privilégié, la table froide 3 est montée fixement par rapport à l'enceinte 7 uniquement au moyen du support thermiquement isolant 4. L'utilisation d'une seule pièce permet de gérer plus facilement l'installation immobile de la table froide à l'intérieure de l'enceinte 7.

Il est également avantageux de prévoir que le support thermiquement isolant 4 présente une forme annulaire dans un plan de coupe perpendiculaire à l'axe optique, l'axe optique traversant la forme annulaire. L'écran froid, le dispositif de détection, la table froide 5 et le support thermique isolant 4 sont disposés consécutivement selon l'axe optique ce qui permet de limiter l'encombrement latéral du système de détection.

De manière privilégiée, le support thermiquement isolant 4 présente une forme annulaire dans un plan de coupe perpendiculaire à l'axe optique, l'axe optique traversant la forme annulaire. Le support thermiquement isolant 4 est sensiblement dans le prolongement du circuit de détection 2 et de l'écran froid 4, il est plus facile de monter fixement la table froide 3 à l'intérieur de l'enceinte 7.

## Revendications

1. Système de détection de rayonnement électromagnétique (1) comportant :
- une enceinte (7) munie d'une paroi avec un fond, un sommet et au moins une paroi latérale reliant le fond et le sommet, l'enceinte (7) étant fermée et étanche,
- un circuit de détection (2) configuré pour détecter un rayonnement électromagnétique et fournir un signal électrique représentatif du rayonnement électromagnétique détecté,
- un refroidisseur (8) fixé à l'enceinte (7) et configuré pour refroidir le circuit de détection (2), le refroidisseur étant de type Joule-Thomson ou Stirling,
- une table froide (3) supportant le circuit de détection (2),
- un écran froid (5) fixé à la table froide (3),
- un support (4) configuré pour monter fixement la table froide (3) par rapport à l'enceinte (7), le support (4) définissant une première liaison mécanique entre la table froide (3) et la paroi de l'enceinte (7), le support (4) étant fixé à l'enceinte (7) indépendamment du refroidisseur (8),
- un connecteur thermique (9) possédant une première extrémité fixée au refroidisseur (8) et une deuxième extrémité fixée à la table froide (3) ou à l'écran froid (5) pour que le refroidisseur (8) refroidisse le circuit de détection (2),
dans lequel le circuit de détection (2), la table froide (3), l'écran froid (5) et le support (4) sont disposés dans l'enceinte (7),
système de détection de rayonnement électromagnétique (1) **caractérisé en ce que** :
- le connecteur thermique (9) est un connecteur thermique déformable qui définit une liaison mécanique flexible entre le refroidisseur (8) et la table froide (3) ou l'écran froid (5),
- le support (4) est un support thermiquement isolant qui isole thermiquement la table froide (3) par rapport à la paroi de l'enceinte (7).

2. Système de détection de rayonnement électromagnétique (1) selon la revendication 1, dans lequel la deuxième extrémité est fixée à une partie centrale de l'écran froid (5), la partie centrale s'étendant depuis le tiers inférieur jusqu'au tiers supérieur de l'écran froid (5) selon un axe optique (A) d'un ensemble de détection de rayonnement électromagnétique formé par le circuit de détection (2) et l'écran froid (5).

3. Système de détection de rayonnement électromagnétique (1) selon l'une quelconque des revendications 1 et 2, dans lequel le refroidisseur (8) possède une première extrémité surmontée par un plot métallique en saillie, le connecteur thermique (9) étant fixé sur le plot métallique en saillie, le plot métallique en saillie du refroidisseur (8) étant monté saillant de la face interne de la au moins une paroi latérale de l'enceinte (7) et isolé thermiquement de l'enceinte (7).

4. Système de détection de rayonnement électromagnétique (1) selon l'une quelconque des revendications 1 à 3, dans lequel le connecteur thermique (9) est choisi parmi, un ressort, une tresse, un tricot, un tissu, un soufflet, un piston ou au moins un fil en métal.

5. Système de détection de rayonnement électromagnétique (1) selon l'une quelconque des revendications 1 à 4, dans lequel le connecteur thermique (9) est connecté directement à l'écran froid (5).

6. Système de détection de rayonnement électromagnétique (1) selon l'une quelconque des revendications 1 à 5, dans lequel un refroidisseur additionnel (8) est fixé à la au moins une paroi latérale de l'enceinte (7) et un connecteur thermique additionnel (9) relie thermiquement une extrémité du refroidisseur additionnel (8) et le sommet de l'écran froid (5), le connecteur thermique (9) étant fixé à la table froide (3) ou dans la moitié inférieure de l'écran froid (5) s'étendant depuis la table froide (3).

7. Système de détection de rayonnement électromagnétique (1) selon l'une des revendications 5 et 6, dans lequel le refroidisseur (8) est un refroidisseur Stirling.

8. Système de détection de rayonnement électromagnétique (1) selon l'une des revendications 5 et 6, dans lequel le refroidisseur (8) est un refroidisseur Joule-Thomson.

9. Système de détection de rayonnement électromagnétique (1) selon l'une quelconque des revendications 1 à 8, dans lequel la conductivité thermique du support thermiquement isolant (4) est inférieure à la conductivité thermique du connecteur thermique (9).

10. Système de détection de rayonnement électromagnétique (1) selon l'une quelconque des revendications 1 à 9, dans lequel le support thermiquement isolant (4) est ajouré et/ou la connexion entre le support thermiquement isolant (4) et la table froide (3) n'est pas étanche.

11. Système de détection de rayonnement électromagnétique (1) selon l'une quelconque des revendications 1 à 10, dans lequel le support thermiquement isolant (4) sépare le circuit de détection (2) et le fond de l'enceinte (7) selon un axe optique (A) du circuit de détection.

12. Système de détection de rayonnement électromagnétique (1) selon l'une quelconque des revendications 1 à 11, dans lequel le support thermiquement isolant (4) présente une forme annulaire dans un plan de coupe perpendiculaire à l'axe optique (A), l'axe optique (A) traversant la forme annulaire.

13. Système de détection de rayonnement électromagnétique (1) selon l'une quelconque des revendications 1 à 12, dans lequel la table froide (3) est montée fixement par rapport à l'enceinte (7) uniquement au moyen du support thermiquement isolant (4).

14. Procédé de refroidissement d'un système de détection de rayonnement électromagnétique (1) comportant les étapes suivantes :
- fournir un système de détection de rayonnement électromagnétique (1) selon l'une des revendications 1 à 13,
- activer le refroidisseur (8) pour refroidir le circuit de détection (2).

## Patentansprüche

1. System zur Detektion elektromagnetischer Strahlung (1), umfassend:
- ein Gehäuse (7), das mit einer Wand mit einem Boden, einer Oberseite und mindestens einer Seitenwand versehen ist, die den Boden mit der Oberseite verbindet, wobei das Gehäuse (7) geschlossen und dicht ist,
- eine Detektionsschaltung (2), die dazu konfiguriert ist, eine elektromagnetische Strahlung zu detektieren und ein elektrisches Signal auszugeben, das für die detektierte elektromagnetische Strahlung repräsentativ ist,
- einen Kühler (8), der am Gehäuse (7) befestigt und dazu konfiguriert ist, die Detektionsschaltung (2) zu kühlen, wobei der Kühler vom Joule-Thomson- oder Stirling-Typ ist,
- einen Kältetisch (3), der die Detektionsschaltung (2) trägt,
- ein Kälteschild (5), das am Kältetisch (3) befestigt ist,
- einen Träger (4), der dazu konfiguriert ist, den Kältetisch (3) fest an das Gehäuse (7) zu montieren, wobei der Träger (4) eine erste mechanische Verbindung zwischen dem Kältetisch (3) und der Wand des Gehäuses (7) definiert, wobei der Träger (4) unabhängig vom Kühler (8) am Gehäuse (7) befestigt ist,
- eine Thermoverbindungseinrichtung (9) mit einem ersten Ende, das am Kühler (8) befestigt ist, und einem zweiten Ende, das am Kältetisch (3) oder dem Kälteschild (5) befestigt ist, damit der Kühler (8) die Detektionsschaltung (2) kühlt,
wobei die Detektionsschaltung (2), der Kältetisch (3), das Kälteschild (5) und der Träger (4) im Gehäuse (7) angeordnet sind,
wobei das System zur Detektion elektromagnetischer Strahlung (1) **dadurch gekennzeichnet ist, dass**:
- die Thermoverbindungseinrichtung (9) eine verformbare Thermoverbindungseinrichtung ist, die eine flexible mechanische Verbindung zwischen dem Kühler (8) und dem Kältetisch (3) oder dem Kälteschild (5) definiert,
- der Träger (4) ein wärmeisolierender Träger ist, der den Kältetisch (3) der Wand des Gehäuses (7) gegenüber thermisch isoliert.

2. System zur Detektion elektromagnetischer Strahlung (1) nach Anspruch 1, wobei das zweite Ende an einem Mittelteil des Kälteschilds (5) befestigt ist, wobei der Mittelteil sich entlang einer optischen Achse (A) einer Anordnung zur Detektion elektromagnetischer Strahlung, die durch die Detektionsschaltung (2) und das Kälteschild (5) gebildet wird, vom unteren Drittel bis zum oberen Drittel des Kälteschilds (5) erstreckt.

3. System zur Detektion elektromagnetischer Strahlung (1) nach einem der Ansprüche 1 und 2, wobei der Kühler (8) ein erstes Ende aufweist, das von einem vorspringenden Metallklotz überragt wird, wobei die Thermoverbindungseinrichtung (9) am vorspringenden Metallklotz befestigt ist, wobei der vorspringende Metallklotz des Kühlers (8) von der Innenseite der mindestens einen Seitenwand des Gehäuses (7) vorspringend angebracht und vom Gehäuse (7) thermisch isoliert ist.

4. System zur Detektion elektromagnetischer Strahlung (1) nach einem der Ansprüche 1 bis 3, wobei die Thermoverbindungseinrichtung (9) aus einer Feder, einem Geflecht, einem Gestrick, einem Gewebe, einem Balg, einem Kolben oder mindestens einem Metalldraht gewählt ist.

5. System zur Detektion elektromagnetischer Strahlung (1) nach einem der Ansprüche 1 bis 4, wobei die Thermoverbindungseinrichtung (9) direkt mit dem Kälteschild (5) verbunden ist.

6. System zur Detektion elektromagnetischer Strahlung (1) nach einem der Ansprüche 1 bis 5, wobei ein zusätzlicher Kühler (8) an der mindestens einen Seitenwand des Gehäuses (7) befestigt ist und eine zusätzliche Thermoverbindungseinrichtung (9) ein Ende des zusätzlichen Kühlers (8) mit der Oberseite des Kälteschilds (5) thermisch verbindet, wobei die Thermoverbindungseinrichtung (9) am Kältetisch (3) oder in der unteren Hälfte des sich vom Kältetisch (3) aus erstreckenden Kälteschilds (5) befestigt ist.

7. System zur Detektion elektromagnetischer Strahlung (1) nach einem der Ansprüche 5 und 6, wobei der Kühler (8) ein Stirling-Kühler ist.

8. System zur Detektion elektromagnetischer Strahlung (1) nach einem der Ansprüche 5 und 6, wobei der Kühler (8) ein Joule-Thomson-Kühler ist.

9. System zur Detektion elektromagnetischer Strahlung (1) nach einem der Ansprüche 1 bis 8, wobei die Wärmeleitfähigkeit des wärmeisolierenden Trägers (4) kleiner ist als die Wärmeleitfähigkeit der Thermoverbindungseinrichtung (9).

10. System zur Detektion elektromagnetischer Strahlung (1) nach einem der Ansprüche 1 bis 9, wobei der wärmeisolierende Träger (4) durchbrochen ist und/oder die Verbindung zwischen dem wärmeisolierenden Träger (4) und dem Kältetisch (3) nicht dicht ist.

11. System zur Detektion elektromagnetischer Strahlung (1) nach einem der Ansprüche 1 bis 10, wobei der wärmeisolierende Träger (4) die Detektionsschaltung (2) und den Boden des Gehäuses (7) entlang einer optischen Achse (A) der Detektionsschaltung trennt.

12. System zur Detektion elektromagnetischer Strahlung (1) nach einem der Ansprüche 1 bis 11, wobei der wärmeisolierende Träger (4) in einer Schnittebene senkrecht zur optischen Achse (A) eine Ringform aufweist, wobei die optische Achse (A) durch die Ringform verläuft.

13. System zur Detektion elektromagnetischer Strahlung (1) nach einem der Ansprüche 1 bis 12, wobei der Kältetisch (3) nur über den wärmeisolierenden Träger (4) fest an das Gehäuse (7) montiert ist.

14. Verfahren zum Kühlen eines Systems zur Detektion elektromagnetischer Strahlung (1), umfassend die folgenden Schritte:
- Bereitstellen eines Systems zur Detektion elektromagnetischer Strahlung (1) nach einem der Ansprüche 1 bis 13,
- Aktivieren des Kühlers (8), um die Detektionsschaltung (2) zu kühlen.

## Claims

1. Electromagnetic radiation detection system (1) comprising:
- an enclosure (7) provided with a wall with a bottom, a top and at least one side wall connecting the bottom and the top, the enclosure (7) being closed and tightly sealed,
- a detection circuit (2) configured to detect an electromagnetic radiation and to supply an electrical signal representative of the detected electromagnetic radiation,
- a cooler (8) fixed to the enclosure (7) and configured to cool the detection circuit (2), the cooler being of Joule-Thomson or Stirling type,
- a cold table (3) supporting the detection circuit (2),
- a cold shield (5) fixed to the cold table (3),
- a support (4) configured to fit the cold table (3) fixedly with respect to the enclosure (7), the support (4) defining a first mechanical connection between the cold table (3) and the wall of the enclosure (7), the support (4) being fixed to the enclosure (7) independently from the cooler (8),
- a thermal connector (9) having a first end fixed to the cooler (8) and a second end fixed to the cold table (3) or to the cold shield (5) so that the cooler (8) cools the detection circuit (2),
wherein the detection circuit (2), the cold table (3), the cold shield (5) and support (4) are arranged in the enclosure (7),
electromagnetic radiation detection system (1) **characterised in that**:
- the thermal connector (9) is a deformable thermal connector that defines a flexible mechanical connection between the cooler (8) and the cold table (3) or to the cold shield (5),
- the support (4) is a thermally insulating support that thermally insulates the cold table (3) with respect to the wall of the enclosure (7).

2. Electromagnetic radiation detection system (1) according to claim 1, wherein the second end is fixed to a central part of the cold shield (5), the central part extending from the bottom third up to the top third of the cold shield (5) along an optical axis (A) of an electromagnetic radiation detection assembly formed by the detection circuit (2) and the cold shield (5).

3. Electromagnetic radiation detection system (1) according to either one of claims 1 and 2, wherein the cooler (8) has a first end capped by a salient metal stud, the thermal connector (9) being attached to the salient metal stud, the metal stud salient from the cooler (8) being fitted salient from the inner surface of the at least one side wall of the enclosure (7) and thermally insulated from the enclosure (7).

4. Electromagnetic radiation detection system (1) according to any one of claims 1 to 3, wherein the thermal connector (9) is chosen from a spring, a braid, a knit, a fabric, a gusset, a piston or at least a wire made of metal.

5. Electromagnetic radiation detection system (1) according to any one of claims 1 to 4, wherein the thermal connector (9) is connected directly to the cold shield (5).

6. Electromagnetic radiation detection system (1) according to any one of claims 1 to 5, wherein an additional cooler (8) is fastened to the at least one side wall of the enclosure (7) and an additional thermal connector (9) thermally connects one end of the additional cooler (8) and the top of the cold shield (5), the thermal connector (9) being fixed to the cold table (3) or in the bottom half of the cold shield (5) extending from the cold table (3).

7. Electromagnetic radiation detection system (1) according to one of claims 5 and 6, wherein the cooler (8) is a Stirling cooler.

8. Electromagnetic radiation detection system (1) according to one of claims 5 and 6, wherein the cooler (8) is a Joule-Thomson cooler.

9. Electromagnetic radiation detection system (1) according to any one of claims 1 to 8, wherein the thermal conductivity of the thermally insulating support (4) is lower than the thermal conductivity of the thermal connector (9).

10. Electromagnetic radiation detection system (1) according to any one of claims 1 to 9, wherein the thermally insulating support (4) is apertured and/or the connection between the thermally insulating support (4) and the cold table (3) is not tightly sealed.

11. Electromagnetic radiation detection system (1) according to any one of claims 1 to 10, wherein the thermally insulating support (4) separates the detection circuit (2) and the bottom of the enclosure (7) along an optical axis (A) of the detection circuit.

12. Electromagnetic radiation detection system (1) according to any one of claims 1 to 11, wherein the thermally insulating support (4) presents an annular shape in a cutting plane perpendicular to the optical axis, the optical axis passing through the annular shape.

13. Electromagnetic radiation detection system (1) according to any one of claims 1 to 12, wherein the cold table (3) is mounted fixedly with respect to the enclosure (7) solely by means of the thermally insulating support (4).

14. Method for cooling an electromagnetic radiation detection system (1) comprising the following steps:
- providing an electromagnetic radiation detection system (1) according to one of claims 1 to 13,
- activating the cooler (8) to cool the detection circuit (2).
